# EUROPÄISCHE PATENTANMELDUNG

(11) **EP 2 505 856 A2**
(43) Veröffentlichungstag der Anmeldung: **03.10.2012**
(21) Anmeldenummer: 12160043.1
(22) Anmeldetag: 19.03.2012
(51) Int. Cl.: F16B 19/14, F16B 19/06, F16B 19/08

(54) **Verfahren zur Herstellung einer Verbindung mindestens zweier aufeinander liegender Bauteile**

(30) Priorität: 01.04.2011 DE 102011015790
(71) Anmelder: Ejot GmbH & Co. KG, 57334 Bad Laasphe (DE)
(72) Erfinder: Christ, Eberhard, 99897 Tambach - Dietharz (DE)
(74) Vertreter: Bardehle, Heinz

(57) **Zusammenfassung**

Die Erfindung bezieht sich auf ein Verfahren zur Herstellung einer Verbindung mindestens zweier aufeinander liegender Bauteile (5,6) mit einem Verbindungselement (1), das zum Eindringen in die Bauteile in diese gedrückt wird, wobei das Verbindungselement unter Bildung eines Durchzugs unter plastischer Verformung die Bauteile durchdringt. Die Bauteile liegen dabei auf einem Amboss (7) mit einer Ausnehmung auf, in die das Verbindungselement nach Durchdringen der Bauteile mit einer Spitze hineinragt. Die Spitze (4) wird in dieser Ausnehmung unter Druck und Rotation zu einer radialen Erweiterung gegenüber dem Durchmesser des Verbindungselementes geformt, durch die die hergestellte Verbindung gesichert und das Verbindungselement selbst gegen Herausziehen bzw. Herausfallen gesichert wird.

## Beschreibung

Die Erfindung bezieht sich auf ein Verfahren zur Herstellung einer Verbindung mindestens zweier aufeinander liegender Bauteile mit einem Verbindungselement, das zum Eindringen in die Bauteile in diese gedrückt wird, wobei das Verbindungselement unter Bildung eines Durchzugs unter plastischer Verformung die Bauteile durchdringt.

Ein derartiges Verfahren und das dazu verwendete Verbindungselement sind in der DE 20 2006 000 666 U1 dargestellt. Das bekannte Verbindungselement wird in der Druckschrift als Nagel bezeichnet und wirkt auch wie ein solcher, und zwar derart, dass das Verbindungselement in nicht vorgelochte aufeinander liegende Platten aufgesetzt und durch diese hindurch geschlagen wird, wobei sich insbesondere aus der unteren Platte ein relativ kurzer Durchzug ausbildet, der aus beim Eintreiben des Nagels seitlich weggedrücktem Material besteht. Irgendeine Sicherung gegen Herausziehen oder Herausfallen des Nagels ist dabei nicht vorgesehen.

Der Erfindung liegt die Aufgabe zugrunde, das eingangs genannte Verfahren so zu gestalten, dass sich eine besondere Sicherung der Verbindung und des Verbindungselementes gegen Herausziehen bzw. Herausfallen ergibt, so dass die hergestellte Verbindung besonders betriebssicher ist. Erfindungsgemäß geschieht dies dadurch, dass die Bauteile auf einem Amboss mit einer Ausnehmung aufliegen, in die das Verbindungselement nach Durchdringen der Bauteile mit einer Spitze hineinragt und in dieser Ausnehmung unter Druck und Rotation sich zu einer radialen Erweiterung gegenüber dem Durchmesser des Verbindungselementes ausbildet.

Die Sicherung des Verbindungselementes gegen Herausfallen bzw. Herausziehen geschieht dadurch, dass das Verbindungselement nach Durchdringen der Bauteile in die Ausnehmung in dem Amboss eindringt, auf dem die beiden Bauteile beim Eindringen des Verbindungselementes aufliegen. Dabei wird im Bereich der Ausnehmung dem Verbindungselement die Möglichkeit gegeben, sich radial zu erweitern, um so eine Radialerweiterung zu schaffen, die eine spätere Rückwärtsbewegung des Verbindungselementes mit Sicherheit verhindert. Dies geschieht durch Druck und Rotation der in die Ausnehmung hineinragenden Spitze.

Die radiale Erweiterung lässt sich in günstiger Weise dadurch herstellen, dass beim Auftreffen der Spitze auf den Grund der Ausnehmung ein Druck auf die Spitze erzeugt wird, durch die diese erweitert wird. Eine andere Möglichkeit der Verhinderung einer Rückwärtsbewegung des Verbindungselementes besteht darin, dass in das Verbindungselement, das hierfür eine Bohrung aufweist, ein Dorn zur Stabilisierung der Bohrung eingeführt wird. In den Figuren sind Ausführungsbeispiele der Erfindung dargestellt. Es zeigen:
- Fig. 1: das auf zwei aufeinander liegende Platten aufgesetzte Verbindungselement und den mit einer Ausnehmung versehenen Amboss, der die beiden Bauteile trägt;
- Fig. 2: die Anordnung gemäß Figur 1 mit teilweise in die beiden Platten eingetriebenen Verbindungselement;
- Fig. 3: das vollständig durch die Platten hindurchgedrückte Verbindungselement mit in der Ausnehmung des Amboss radial verlaufender Erweiterung;
- Fig. 4: ein auf zwei Platten aufgesetztes Verbindungselement mit einer Bohrung und darin eingesetzten Dorn;
- Fig. 5: das teilweise durch die Platten hindurch gedrückte Verbindungselement gemäß Figur 4;
- Fig. 6: das ganz durch die beiden Platten hindurch gedrückte Verbindungselement mit der Erweiterung der Spitze des Verbindungselementes.
- Fig. 7: die Anordnung gemäß Fig. 6 mit entferntem Dorn und Amboss.

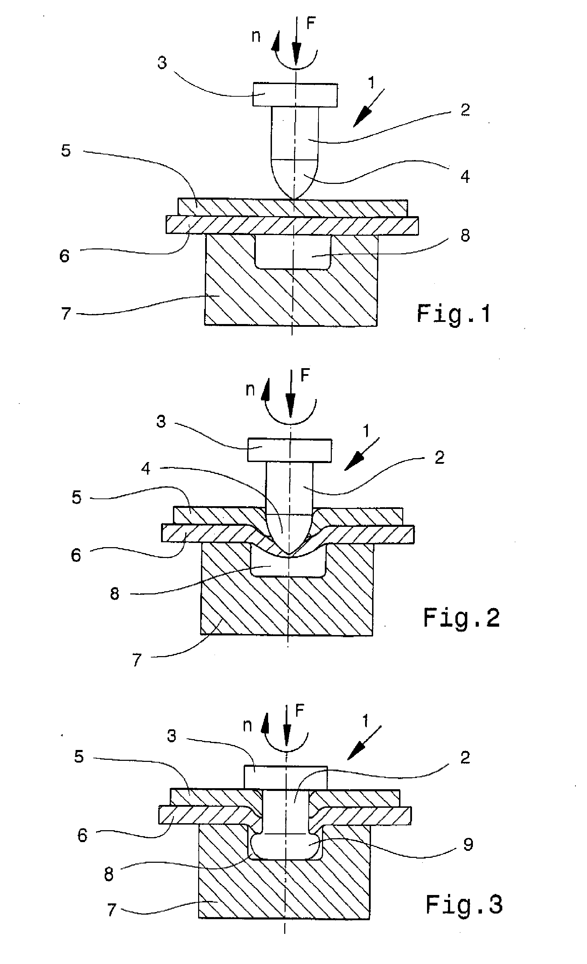

In der Figur 1 ist das Verbindungselement 1 dargestellt, das aus dem zylindrischen Schaft 2 und dem darauf sitzenden Bund 3 besteht. Der Schaft 2 endet in der konisch zulaufenden Spitze 4, die auf der Platte 5 eines Satzes von zwei aufeinander liegenden Bauteilen 5 und 6 aufsitzt. Die Platten 5 und 6 liegen auf dem Amboss 7 auf, der mit der Ausnehmung 8 versehen ist, wobei die Lage des Verbindungselementes 1 und der Ausnehmung 8 so gewählt sind, dass der Schaft 2 genau in Richtung auf die Ausnehmung 8 zielt.

Figur 2 zeigt die Anordnung gemäß Figur 1 in einer Verfahrenssituation, in der das rotierende Verbindungselement 1 gerade durch die beiden Platten 5 und 6 hindurchgetrieben ist und gewissermaßen beginnt, in die Ausnehmung 8 hineinzuragen.

Figur 3 zeigt den Zustand am Ende des Verfahrens zur Herstellung der Verbindung, wobei die Spitze 4 des Schaftes 1 (siehe Fig. 2) sich zu der radialen Erweiterung 9 ausgedehnt hat, da in dieser Position die Spitze 4 auf den Grund der Erweiterung 8 getroffen ist und sich dabei so gestaucht hat, dass sich die vorher als Konus ausgebildete Spitze 4 zu der Erweiterung 9 ausgedehnt hat, in der ihr Außendurchmesser größer ist als das vorher von dem Verbindungselement 1 in den beiden Platten 5 und 6 durchgedrückte Loch, das jeweils eng den Schaft 2 des Verbindungselementes 1 umfasst. Damit ist die sichere Verbindung zwischen den beiden dabei zusammengedrückten Platten 5 und 6 hergestellt, wobei das Verbindungselement 1 gleichzeitig gegen ein Herausfallen aus der Verbindung gesichert ist, nämlich, wie vorstehend dargestellt, durch die Erweiterung 9.

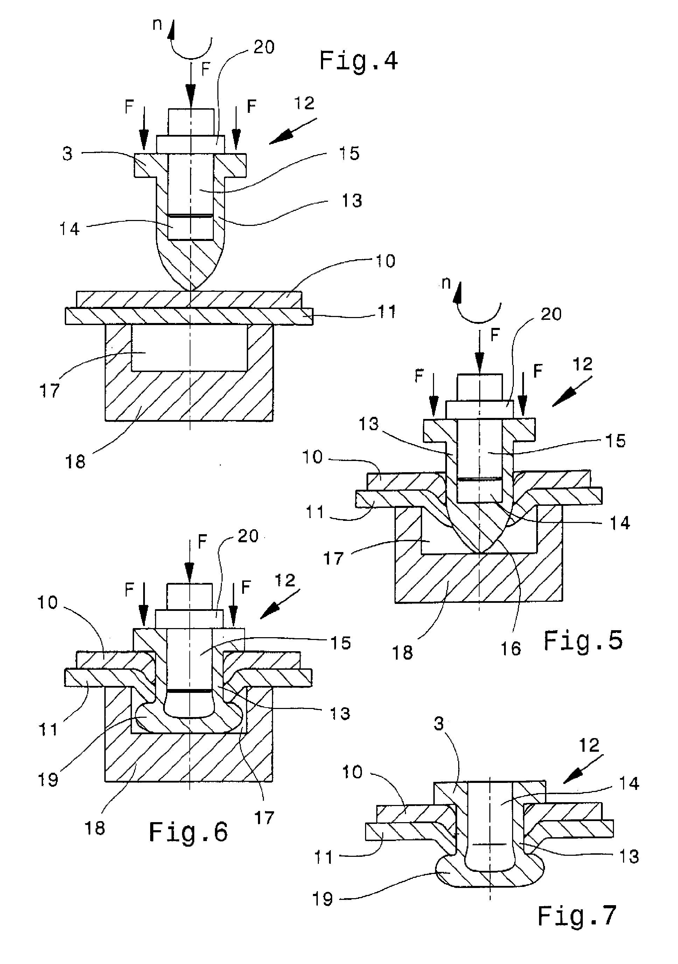

Die eine Variante darstellende Figur 4 zeigt die beiden aufeinander liegenden Platten 10 und 11 (entsprechend den Platten 5 und 6 gemäß Figur 1), auf die das Verbindungselement 12 aufgesetzt ist. Das Verbindungselement 12 weist den Schaft 13 auf, der mit der Bohrung 14 versehen ist, in die der Dorn 15 eingeschoben ist. Der Dorn 15 ist leichtgängig in das Verbindungselement 12 eingeschoben. Durch den Bund 20 wird mit der Kraft F der Dorn 15 auf einer gleichbleibenden Eintauchtiefe gehalten.

Figur 5 zeigt den Weitergang des Verfahrens der Herstellung einer Verbindung, der darin besteht, dass der Dorn 15 und das Verbindungselement 12 rotieren und dieses mit seiner Spitze 16 auf den Grund der Ausnehmung 17 trifft.

Wenn das Verbindungselement 12, ausgehend von der Lage der Figur 5, weiter durch die beiden Platten 10 und 11 hindurch getrieben wird, dann ergibt sich schließlich die Lage gemäß Figur 6, in der sich das Verbindungselement 12, nachdem es auf den Grund der Ausnehmung 17 aufgetroffen ist, in dem Bereich innerhalb der Ausnehmung 17 zu der wulstförmigen Erweiterung 19 umgestaltet hat, in der diese Erweiterung sich hinter die untere Platte 11 setzt, womit das Verbindungselement mit der Erweiterung 19 die beiden Platten 10 und 11 zusammendrückt und in seiner Lage gegen Herausfallen gesichert ist und damit die Verbindung zwischen den beiden Platten 10 und 11 sicher hergestellt ist. Nach Erreichen der Phase des Verfahrens gemäß Figur 6 ist die Verbindung fertig hergestellt, so dass der Amboss 18 entfernt werden kann.

In der Figur 7 wird die durch das Verfahren hergestellte Verbindung zwischen den Platten 10 und 11 gezeigt. Dabei sind der Dorn 15 und der Amboss 18 entfernt. Durch das Entfernen des Dornes 15 können in der Bohrung 14 weitere Konstruktionselemente befestigt werden.

## Patentansprüche

1. Verfahren zur Herstellung einer Verbindung mindestens zweier aufeinander liegender Bauteile (5, 6; 10) mit einem Verbindungselement (1; 12), das zum Eindringen in die Bauteile (5, 6; 10, 11) in diese gedrückt wird, wobei das Verbindungselement (1; 12) unter Bildung eines Durchzugs unter plastischer Verformung die Bauteile (5, 6; 10, 11) durchdringt, **dadurch gekennzeichnet, dass** die Bauteile (5, 6; 10, 11) auf einem Amboss (7; 18) mit einer Ausnehmung (8; 17) aufliegen, in die das Verbindungselement (1; 12) nach Durchdringen der Bauteile (5, 6; 10, 11) mit einer Spitze (4; 16) hineinragt und in dieser Ausnehmung (8; 17) unter Druck und Rotation sich zu einer radialen Erweiterung (9; 19) gegenüber dem Durchmesser des Verbindungselementes (1; 12) ausbildet.

2. Verfahren nach Anspruch 1 **dadurch gekennzeichnet, dass** der Druck durch Auftreffen der Spitze (4; 16) auf den Grund der Ausnehmung (8; 17) erzeugt wird.

3. Verfahren nach Anspruch 1 oder 2 **dadurch gekennzeichnet, dass** das Verbindungselement (12) eine Bohrung (14) aufweist, in die ein Dorn (15) zur Stabilisierung der Bohrung einführbar ist.

4. Verfahren nach Anspruch 3 **dadurch gekennzeichnet, dass** der Dorn (15) mit seinem Einführen die radiale Erweiterung (19) begrenzt.

5. Verbindung zweier aufeinander liegender Bauteile mit einem beide Bauteile (5, 6; 10, 11) durchsetzenden Verbindungselement (1; 2), **dadurch gekennzeichnet, dass** das Verbindungselement (1; 2) mit einem Bund (3; 10) an dem einen Bauteil (5; 12) anliegt und mit einer radialen Erweiterung (9; 19) hinter das andere Bauteil ragt.
